# EUROPEAN PATENT SPECIFICATION

(11) **EP 1 805 368 B1**
(45) Date of publication and mention of the grant of the patent: **28.04.2010**
(21) Application number: 05794559.4
(22) Date of filing: 27.09.2005
(51) Int. Cl.: E01F 8/00, B01D 53/88

(54) **UNIVERSAL PREFABRICATED MONOLITHIC ANTINOISE BARRIER HAVING AIR PURIFYING EFFECT**
VORGEFERTIGTER, EINSTÜCKIGER UNIVERSAL-LÄRMSCHUTZWALL MIT LUFTREINIGUNGSWIRKUNG
BARRIERE ANTIBRUIT MONOLITHIQUE PREFABRIQUEE UNIVERSELLE POSSEDANT UN EFFET DE PURIFICATION D'AIR.

(30) Priority: 27.09.2004 IT RM20040457
(43) Date of publication of application: 11.07.2007
(73) Proprietor: Daneu, Alessandro, 20149 Milano (IT)
(72) Inventor: CIRILLO, Francesco, I-00152 Roma (IT)
(74) Representative: Sarpi, Maurizio
(86) International application number: PCT/IT2005/000561
(87) International publication number: WO 2006/035471

(56) References cited:
- EP-A- 0 529 177
- EP-A- 0 900 881
- EP-A- 1 077 446
- DE-U1- 20 208 099
- GB-A- 2 374 094
- JP-A- 2003 041 519
- PATENT ABSTRACTS OF JAPAN vol. 2003, no. 02, 5 February 2003 (2003-02-05) & JP 2002 309528 A (NIPPON STEEL METAL PROD CO LTD), 23 October 2002 (2002-10-23)
- PATENT ABSTRACTS OF JAPAN vol. 2003, no. 12, 5 December 2003 (2003-12-05) & JP 2004 052481 A (ISHIKAWAJIMA HARIMA HEAVY IND CO LTD), 19 February 2004 (2004-02-19)

## Description

In the range of the anti-noise barriers for road and motorway applications the present technology gives several solutions, some of them with prevailing deadening effect, some other with soundproofing effect, whereas barriers also having a pulling down function against gaseous polluting agents are just subjected to some special treatment or provided with accessories initially not designed for such a function.

The anti-noise barrier of the present invention is made such that the graduation of the deadening and soundproofing effects and at the same time a considerable reduction in the gaseous polluting agents by photocatalysis can be provided at will by only one construction. In addition, the embodiment of the present invention is such as to provide a monolithic deadening construction consisting of prefabricated components that do not require any maintenance in time and are able to follow even and raised layouts of any road.

The problem of protecting determined places from the effects of the noise often is faced by acoustic (anti-noise) barriers between noise source and places to be protected. Typical examples are the anti-noise barriers installed along motorways and roads with heavy traffic where they cross urban conglomerations.

From the operating point of view the nowadays barriers are essentially of two types according to whether the soundproofing or deadening effect is prevailing, whereas from the aesthetic -i.e. environmental- point of view a great distinction can be made between opaque and transparent barriers.

Among the most frequently used barriers, those should be appreciated that are made of prefabricated concrete panels which are opaque and have a prevailing soundproofing effect, those made of box-like aluminium panels filled with glass or rock wool which are opaque and have a prevailing deadening effect, and those made of flat plates of methyl metacrilate (or similar polymers) or glass **characterized in that** they are transparent and have an almost exclusive soundproofing effect.

The selection among the different types depends on the anthropic geography of the place to be protected and the features of the noise to be treated. The prevailing acoustic effect greatly depends on the selected type of barrier so that it is not easy or economic to enhance the soundproofing effect of the aluminium barriers or the deadening effect of the concrete barriers. Moreover, it is hard and expensive to provide an appreciable deadening effect in the transparent panels.

It is also known, from the closest prior art document JP2003041519, an anti-glare panel which comprises a panel-shaped body molded with an approximately corrugated cross section such that projecting face parts corresponding to the apexes of the corrugations and recessed face parts corresponding to the recesses of the corrugations are transparent whereas all or some of web face parts connecting the projecting face parts and the recessed face parts together are nontransparent. A nontransparent film may be bonded to the web surface parts or a nontransparent paint may be applied thereto or the web surface parts may be formed from a nontransparent material

According to JP2003041519, it is provided an anti-glare panel serving also as a sound insulating panel adapted to block off the headlights of automobiles on the opposite lane and reduce automobile noise as much as possible without too much blocking view alongside the road.

In all above-mentioned barriers the panel forming the acoustically active member can be prefabricated but requires a great care during the installation. It is then necessary to provide the deadening of the whole surface formed by juxtaposed panels. The operation itself is laborious and complex and becomes still more difficult if the barriers should follow differences in height or curvilinear paths. To this end suitable seals or sealing means allowing the surface to be deadened upon first installation are used. However, the materials forming the structural support members of the panels are generally different from the materials of the panels themselves or in any case the panels are characterized by a different coefficient of thermal expansion so that the acoustically active surfaces of such panels exposed to the inclemency of the weather lose their waterproofing and almost all their acoustic efficiency because of temperature range in a short time, unless a frequent, heavy maintenance is carried out.

Generally, the effect of air purification from the polluting gases is not taken into consideration in the design of the anti-noise barriers available on the market. Sometimes such effect is sought by adding accessories or subjecting the construction to special treatments formerly not provided.

The main object of the present invention is to overcome such drawbacks and restrictions of the prior art by providing a modular anti-noise barrier further having an air purification effect.

This has been accomplished according to the invention by providing an anti-noise barrier according to the appended claims.

A better understanding of the invention will result from the following description with reference to the accompanying drawings that show a preferred embodiments thereof only by way of a not limiting example.

In the drawings:
Figure 1 is a top perspective view of a module of the anti-noise barrier according to the invention;
Figure 2 is a partial elevation view of the module of fig. 1;
Figure 3 is a partial top plan view of the connecting length between two adjacent modules of the barrier according to the present invention;
Figure 4 shows a detail of the acoustically active surface of the anti-noise barrier; and
Figures 5A and 5B show schematically the overlap surfaces of two adjacent modules.

Each module 1 forming the barrier can have any size. For the sake of clarity of the description reference is made by way of example to a module having a height of 2000 mm and a length of 2000 mm so that it can reach a standard height for road and motorway applications as it is placed on a concrete support with a height of about 1000 mm.

With reference to the embodiment disclosed module 1 consists of a base 2 made of metal section bar which is bolted to the underlying concrete support member (or equivalent) in a suitable position. Base 2 supports a plate 3 with a horizontal corrugated section having a deadening and/or soundproofing surface 3.

A covering member 4 preferably made of metal sheet which will afterwards be called "cover" is connected to the upper edge of plate 3 and has the function of a support for a diffraction member 5 extending all over the length of the module. The lower and upper edges of plate 3 which are connected to base 2 and cover 4, respectively, are preferably protected by shaped elastomeric seals 6 like those for car industry.

According to a peculiar feature of the finding, except for the corrugations at the right and left vertical ends of plate 3, all corrugations interposed therebetween can have any shape and pitch.

More specifically, the end corrugations must have a horizontal section with the shape of an arc of circumference.

The thickness of the corrugated plate 3 is a function of the different acoustic efficiencies desired for the acoustically active surface. In the applications in which transparent barriers are preferred, the corrugated surface can be made of glass. A particular efficiency is found in applications in which the acoustically active surface is made of tempered glass consisting of only one layer or more layers coupled to one another.

According to a further peculiar feature of the invention, the corrugated plate 3 can be conveniently coated by a thin layer of titan dioxide whatever thickness it has and whatever stock material it is made of. Thus, the air is purified from the polluting gases by the photocatalysis effect.

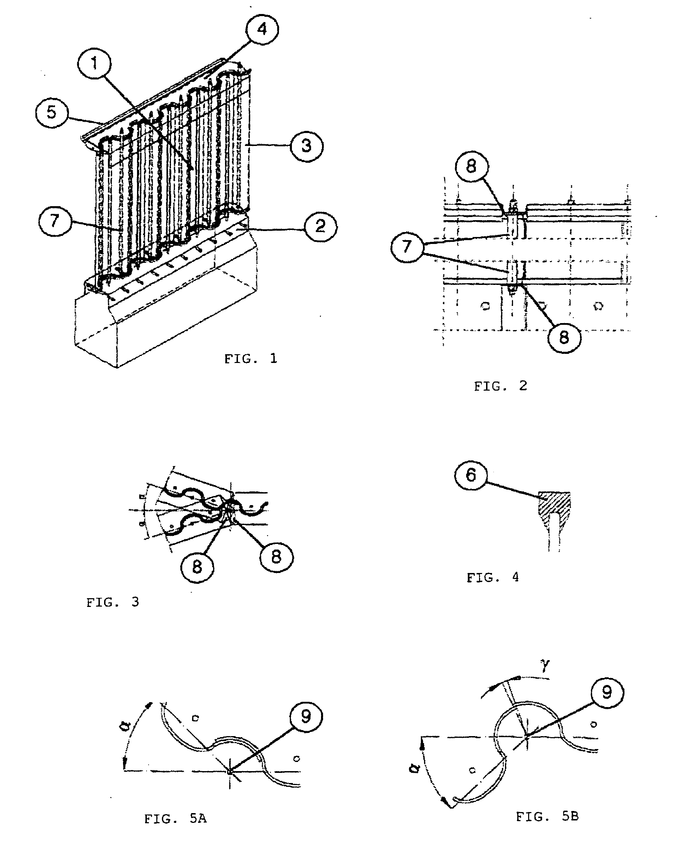

The assembly consisting of corrugated plate 3, base 2 and cover 4 is held by sealing rods 7 (i.e. provided with seals) which are disposed in a suitable position with respect to the shape of the corrugations defined by the horizontal section of plate 3, thus stiffening the whole module. In the embodiment shown in figure 1, the corrugations consist of a succession of arcs of circumference, and rods 7 are positioned at the centres of such arcs of circumference.

Rods 7 consist preferably of tubular metal members provided on their surfaces with caps of deadening material such as water-repellent fibreglass or the like.

Advantageously, besides the improvement of the statics of module 1, rods 7 also perform an acoustically active function. Actually, their position relative to plate 3 as well as shape and size of the corrugations are defined such that a significant portion of the sound waves hitting the corrugated surface of the plate are reflected to the vertical cylindrical deadening members forming rods 7. Thus, the deadening effect of the caps acting as diffraction members and sound deadeners is enhanced both as far as direct and reflected sound waves is concerned.

Additionally, rods 7 located on the opposite side of the acoustically active surface with respect to the noise source perform their function of diffraction members and deadeners of the sound waves produced by the vibrations of the acoustically active surface itself.

The soundproofing effect of the acoustically active surface is in turn enhanced by that the latter has a corrugated shape. In fact, under the same thickness, material, and visible surface, the corrugated shape allows the plate to show as much higher moment of inertia and stiffness as greater magnitude and frequency of the waves are. Therefore, under the same acoustic effects, the corrugated shape allows a considerable saving of material.

The finding provides a graduation at will of the ratio between the soundproofing and the deadening effects of the acoustic barrier disclosed. In fact, both the thickness of the plate (soundproofing effect) and the shape of the corrugations as well as position and diameter of the caps (deadening effect) can be changed.

The right and left ends of base 2 and cap 4 terminate in shaped horizontal brackets 8 able to combine with the corresponding brackets 8 of adjacent module 1 to provide a hinge with axis of rotation formed by the vertical rod 7 which is shared by two adjacent modules and is provided with caps.

The brackets on the rotation axis of the hinge are combined in alternate positions, as shown in the figures. Thus, as differences in height have to be overcome upon installation, it is sufficient to provide rods with a suitable length and to arrange the brackets with an offset corresponding to the difference in height to be overcome.

As already mentioned, according to the present invention, the corrugations at the vertical right and left ends of plate 3 of module 1 are formed by arcs of circumference connected to the contour of the adjacent corrugation to the inside of the plate.

A further peculiar feature of the finding is that the centres 9 of the arcs of circumference of the end corrugations are located on the axis of the end rod shared by two adjacent modules. Such axis coincides with the axis of rotation of the hinge that allows two adjacent modules to be disposed according to not parallel planes in order to follow the layout of the roadway (fig. 3). The extension of the end arc of circumference of plate 3 is defined by the angle +alpha or -alpha which is the maximum angle formed by two adjacent modules, and angle gamma which is the overlap angle of the acoustically active surfaces to be provided as two adjacent modules enclose angle +alpha or -alpha (figs. 5A and 5B).

According to the finding, the continuity of the acoustically active surface of plate 3 is guaranteed by the overlap angle gamma of the end corrugations of the plates belonging to two adjacent modules, as shown in the figures.

In the anti-noise barrier disclosed the soundproofing effect is achieved by the resiliency of the material of plate 3 that allows the geometrical overlap interferences of the arcs of circumference to be compensated, moreover ensuring a good contact between facing surfaces. These surfaces are sealed preferably by elastomeric silicone seals. A continuous, monolithic soundproofing surface is then formed among all juxtaposed modules 1 to form a barrier with any shape both in plan and elevation view.

Advantageously the invention provides a very sturdy solution to the problem of the soundproofing reduction due to cycles of temperature range. In fact, the deformations to the vertical direction are effectively compensated by the resiliency of the seals of the car industry that protect the upper and lower horizontal edges of corrugated plate 3, whereas the corrugated shape of the plates and the natural resiliency of the material allows the deformations to the horizontal direction to be effectively compensated without subjecting the vertical joints to critical stress.

As a result there is a considerable reduction in the maintenance as well as installation cost of the anti-noise barrier of the invention. In fact, the anti-noise barrier hitherto disclosed provides a fully modular solution in which each module 1 consists of prefabricated members connected to one another on the road yard without any particular equipment. It should be appreciated that the economic convenience is also extended to the transportation cost as the particular shape of the module allows it to be packed and transported by high-apparent-density means.

## Claims

1. An anti-noise barrier consisting of modules (1) having one or more acoustically active, soundproofing and/or deadening surfaces (3) provided with vertical side end sections having a corrugated horizontal section with the shape of an arc of circumference, said acoustically active surfaces (3) are provided with means for pulling down gaseous polluting agents consisting of a titan dioxide layer which coats said acoustically active surfaces (3), said pulling down of gaseous polluting agents resulting from the photocatalysis effect provided by said titan dioxide layer, the acoustically active surface is a plate (3) made of glass preferably transparent, **characterized in that** each module (1) consists of at least a base (2) and a cover (4) for said at least one acoustically active surface (3) as well as vertical cylindrical support members (7), wherein the said support members (7) are positioned at the centres of said arcs of circumference.

2. The anti-noise barrier according to the preceding claim, **characterized in that** said base consists of an essentially horizontal metal section (2) able to be secured to a lower support means of the known type, said acoustically active surface (3) being secured to said base (2).

3. The anti-noise barrier according to claim 1, **characterized in that** said cover consists of a metal sheet (4) able to be secured at the upper side to acoustically active surface (3).

4. The anti-noise barrier according to claims 2 and 3, **characterized in that** said metal base (2) and said cover (4) carry at their ends suitable shaped brackets to form hinges allowing the rotation of a module (1) with respect to the adjacent module as well as the offset of both adjacent modules in case of differences in height from each other.

5. The anti-noise barrier according to claim 3, **characterized in that** said cover (4) acts as a support of diffraction members (5) extending all over the length of module (1).

6. The anti-noise barrier according to any preceding claim, **characterized in that** each said acoustically active surface (3) consists of a plate (3) having an essentially corrugated horizontal section, the thickness of said plate being a function of the soundproofing effect to be achieved.

7. The anti-noise barrier according to claim 1, **characterized in that** said acoustically active surface (3) in interposed between base (2) and cover (4).

8. The anti-noise barrier according to claim 1, **characterized in that** plate (3) forming the acoustically active surface is made of tempered single-layer or multi-layer glass.

9. The anti-noise barrier according to any preceding claim, **characterized in that** the side end sections of the acoustically active surface (3) are shaped such that the corrugations of the ends of each module (1) form arcs of circumference with centre on the axis of rotation of the hinges that allow a module to be rotated and offset with respect to the adjacent module.

10. The anti-noise barrier according to the preceding claim, **characterized in that** the acoustically active surface (3) is made such that the cylindrical portion of the end corrugations of two adjacent modules (1) combine with each other by an overlap angle (gamma) which can be predetermined at will.

11. The anti-noise barrier according to claim 9 or 10, **characterized in that** the acoustically active surface (3) is made such that the cylindrical portion of the end corrugations of two adjacent modules (1) provide combined surfaces that are held to each other by the resilient reaction to the geometrical overlap interference and the action of an interposed elastomeric seal, thus providing one monolithic soundproofing and deadening surface.

12. The anti-noise barrier according to claim 1, **characterized in that** said vertical cylindrical members act as tie rods (7) between base (2) and cover (4) to provide module (1) with mechanical stability.

13. The anti-noise barrier according to the preceding claim, **characterized in that** said vertical cylindrical members (7) are coated by a deadening material, thus providing their function of diffraction members and deadeners both for sound waves from the sound source and for the sound waves reflected from the acoustically active surface (3).

14. The anti-noise barrier according to the preceding claim, **characterized in that** the acoustically active surface (3) is made by materials having thickness and corrugations selected as a function of the ratio between the soundproofing and the deadening effects to be achieved, said soundproofing and deadening effects being also function of relative position, diameter, and thickness of the deadening coating of the vertical cylindrical members (7).

## Patentansprüche

1. Schallschutzmauer, welche Module (1) enthält, welche eine oder mehrere akustisch aktive, schallisolierende und/oder schalldämpfende Oberflächen (3) haben, welche mit Sektionen an vertikalen Seitenenden bereitgestellt sind, welche eine gewellte horizontale Sektion mit einer bogenförmigen Umfangsform haben, wobei die akustisch aktiven Oberflächen (3) mit einem Element zum Reduzieren von gasförmigen Schadstoffmitteln bereitgestellt sind, welches eine Titan-Dioxid-Schicht enthält, welches die akustisch aktiven Oberflächen (3) beschichtet, wobei die Reduktion der gasförmigen Schadstoffmittel aus einer Fotokatalyse-Wirkung herrührt, welche durch die Titan-Dioxid-Schicht bereitgestellt wird, wobei die akustisch aktive Oberfläche eine Platte (3) ist, welche aus einem vorzugsweise transparenten Glas erstellt ist, **dadurch gekennzeichnet, dass** jedes Modul (1) zumindest eine Basis (2) und eine Abdeckung (4) für die zumindest eine akustisch aktive Oberfläche (3), als auch vertikale zylindrische Halteelemente (7) enthält, wobei die Halteelemente (7) an den Zentren der bogenförmigen Umfänge positioniert sind.

2. Schallschutzmauer nach Anspruch 1, **dadurch gekennzeichnet, dass** die Basis eine im Wesentlichen horizontale Metallsektion (2) enthält, welche dazu ausgebildet ist, an einem unteren Halteelement des bekannten Typs befestigt zu werden, wobei die akustisch aktive Oberfläche (3) an der Basis (2) befestigt ist.

3. Schallschutzmauer nach Anspruch 1, **dadurch gekennzeichnet, dass** die Abdeckung eine Metallbahn (4) enthält, welche dazu ausgelegt ist, an der oberen Seite der akustisch aktiven Oberfläche (3) befestigt zu werden.

4. Schallschutzmauer nach Anspruch 2 und 3, **dadurch gekennzeichnet, dass** die Metallbasis (2) und die Abdeckung (4) an ihren Enden geeignet geformte Klammern tragen, um Gelenke auszubilden, welche eine Umdrehung eines Moduls (1) mit Bezug auf das angrenzende Modul, als auch den Versatz von beiden angrenzenden Modulen im Falle von einer zueinander unterschiedlichen Höhe erlauben.

5. Schallschutzmauer nach Anspruch 3, **dadurch gekennzeichnet, dass** die Abdeckung (4) als ein Träger für Beugungselemente (5) wirkt, welche sich über die gesamte Länge des Moduls (1) erstrecken.

6. Schallschutzmauer nach einem der vorangehenden Ansprüche, **dadurch gekennzeichnet, dass** jede der akustisch wirksamen Oberflächen (3) eine Platte (3) enthält, welche eine im Wesentlichen gewellte horizontale Sektion hat, wobei die Dicke von der Platte eine Funktion der zu erzielenden schallisolierenden Wirkung ist.

7. Schallschutzmauer nach Anspruch 1, **dadurch gekennzeichnet, dass** die akustisch aktive Oberfläche (3) zwischen der Basis (2) und der Abdeckung (4) zwischengesetzt ist.

8. Schallschutzmauer nach Anspruch 1, **dadurch gekennzeichnet, dass** die Platte (3), welche die akustisch aktive Oberfläche ausbildet, aus einem ausgeglühten Einzelschicht- oder Mehrfachschicht-Glasmaterial erstellt ist.

9. Schallschutzmauer nach einem der vorangehenden Ansprüche, **dadurch gekennzeichnet, dass** die Seitenenden-Sektionen von der akustisch aktiven Oberfläche (3) derart geformt sind, dass die Wellenformen von den Enden von jedem Modul (1) Umfangsbögen, deren Zentren auf der Drehachse von den Gelenken liegen, ausbilden, welche es ermöglichen, dass ein Modul mit Bezug auf das angrenzende Modul umdreht und versetzt wird.

10. Schallschutzmauer nach einem der vorangehenden Ansprüche, **dadurch gekennzeichnet, dass** die akustisch aktive Oberfläche (3) derart erstellt ist, dass die zylindrischen Abschnitte von den End-Wellungen von zwei angrenzenden Modulen (1) durch einen überlappenden Winkel (Gamma), welcher bei Belieben vorbestimmt werden kann, miteinander kombinieren.

11. Schallschutzmauer nach Anspruch 9 oder 10, **dadurch gekennzeichnet, dass** die akustisch aktive Oberfläche (3) derart erstellt ist, dass der zylindrische Abschnitt von den End-Wellungen von zwei angrenzenden Modulen (1) zusammengefasste Oberflächen bereitstellt, welche durch die federnde Reaktion zu der geometrischen Überlappungs-Interferenz und der Wirkung von einer zwischengesetzten Elastomer-Dichtung zueinander gehalten werden, wodurch somit eine monolytisch schallisolierte und dämpfende Oberfläche bereitgestellt wird.

12. Schallschutzmauer nach Anspruch 1, **dadurch gekennzeichnet, dass** die vertikalen zylindrischen Elemente als Spannanker (7) zwischen der Basis (2) und der Abdeckung (4) wirken, um dem Modul (1) eine mechanische Stabilität bereitzustellen.

13. Schallschutzmauer nach einem der vorangehenden Ansprüche, **dadurch gekennzeichnet, dass** die vertikalen zylindrischen Elemente (7) durch ein Dämpfungsmaterial beschichtet sind, wodurch deren Funktion als Beugungselemente und Schalldämpfer bereitgestellt wird, und zwar sowohl für Schallwellen von der Schallquelle als auch für Schallwellen, welche von der akustisch aktiven Oberfläche (3) reflektiert werden.

14. Schallschutzmauer nach einem der vorangehenden Ansprüche, **dadurch gekennzeichnet, dass** die akustisch aktive Oberfläche (3) aus Materialien erstellt ist, welche eine Dicke und Welligkeiten haben, welche als eine Funktion des Verhältnisses zwischen der Schallisolations- und Dämpfungs-Wirkung, welche zu erzielen ist, ausgewählt sind, wobei die Schallisolations- und Dämpfungs-Wirkung ebenfalls eine Funktion von einer relativen Position, von einem Durchmesser und von einer Dicke von der Dämpfungsbeschichtung der vertikalen zylindrischen Elemente (7) ist.

## Revendications

1. Barrière antibruit composée de modules (1) présentant une ou plusieurs surfaces acoustiquement actives (3) d'amortissement du son et/ou d'isolation acoustique ou phonique comportant des parties latérales verticales d'extrémité présentant une partie horizontale ondulée en forme d'arc de cercle, lesdites surfaces acoustiquement actives (3) possédant un moyen pour détruire des agents polluants gazeux consistant en une couche de dioxyde de titane qui recouvre lesdites surfaces acoustiquement actives (3), la destruction des agents polluants gazeux résultant de l'effet de photocatalyse fourni par ladite couche de dioxyde de titane, la surface acoustiquement active étant une plaque (3) réalisée en verre préférentiellement transparent, **caractérisée en ce que** chaque module (1) se compose d'au moins une base (2) et d'au moins une couverture (4) pour ladite au moins une surface acoustiquement active (3) ainsi que d'éléments supports cylindriques verticaux (7), dans laquelle lesdits éléments supports (7) sont placés au centre desdits arcs de cercle.

2. Barrière antibruit selon la revendication précédente, **caractérisée en ce que** ladite base se compose d'une partie métallique sensiblement horizontale (2) pouvant être fixée à un support inférieur du type connu, ladite surface acoustiquement active (3) étant fixée à ladite base (2).

3. Barrière antibruit selon la revendication 1, **caractérisée en ce que** ladite couverture se compose d'une feuille métallique (4) pouvant être fixée en face supérieure sur la surface acoustiquement active (3).

4. Barrière antibruit selon les revendications 2 et 3,
**caractérisée en ce que** ladite base métallique (2) et ladite couverture (4) présentent des extrémités adaptées conformées en crochets pour former des charnières permettant le pivotement d'un module (1) par rapport au module adjacent ainsi que le décalage naturel entre deux modules adjacents en cas de différence de hauteur de l'un par rapport à l'autre.

5. Barrière antibruit selon la revendication 3, **caractérisée en ce que** ladite couverture (4) agit comme support pour des éléments de diffraction (5) s'étendant sur toute la longueur du module (1).

6. Barrière antibruit selon l'une quelconque des revendications précédentes, **caractérisée en ce que** chaque surface acoustiquement active (3) se compose d'une plaque (3) présentant une partie sensiblement horizontale ondulée, l'épaisseur de ladite plaque étant fonction de l'effet d'insonorisation à obtenir.

7. Barrière antibruit selon la revendication 1, **caractérisée en ce que** ladite surface acoustiquement active (3) est interposée entre la base (2) et la couverture (4).

8. Barrière antibruit selon la revendication 1, **caractérisée en ce que** la plaque (3) formant la surface acoustiquement active est réalisée en verre trempé monocouche ou multicouche.

9. Barrière antibruit selon l'une quelconque des revendications précédentes, **caractérisée en ce que** les parties latérales d'extrémité de la surface acoustiquement active (3) sont conformées pour que les ondulations des extrémités de chaque module (1) forment des arcs de cercle dont le centre est situé sur l'axe de pivotement des charnières qui permettent à un module d'être pivoté et décalé par rapport au module adjacent.

10. Barrière antibruit selon la revendication précédente, **caractérisée en ce que** la surface acoustiquement active (3) est réalisée pour que les parties cylindriques des ondulations d'extrémité de deux modules adjacents (1) se combinent l'une à l'autre selon un angle de chevauchement (gamma) qui peut être prédéterminé à volonté.

11. Barrière antibruit selon la revendication 9 ou 10, **caractérisée en ce que** la surface acoustiquement active (3) est réalisée pour que les parties cylindriques des ondulations d'extrémité de deux modules adjacents (1) forment des surfaces combinées maintenues entre elles par réaction résiliente à l'interférence de chevauchement géométrique et par l'action d'un joint élastomère interposé, fournissant de ce fait une surface monolithique d'amortissement du son et d'isolation acoustique.

12. Barrière antibruit selon la revendication 1, **caractérisée en ce que** lesdits éléments cylindriques verticaux agissent comme tiges de renfort (7) entre la base (2) et la couverture (4) pour conférer une stabilité mécanique au module (1).

13. Barrière antibruit selon la revendication précédente, **caractérisée en ce que** lesdits éléments cylindriques verticaux (7) sont revêtus d'une matière amortissant le son, apportant ainsi leur fonction d'éléments de diffraction et d'amortissement du son à la fois pour les ondes sonores provenant de la source de bruit et pour les ondes sonores réfléchies par la surface acoustiquement active (3).

14. Barrière antibruit selon la revendication précédente, **caractérisée en ce que** la surface acoustiquement active (3) est réalisée en des matières présentant une épaisseur et des ondulations sélectionnées en fonction du rapport entre les effets à obtenir d'insonorisation et d'amortissement du son, lesdits effets d'insonorisation et d'amortissement du son étant également fonction de la position relative, du diamètre et de l'épaisseur du revêtement d'amortissement du son des éléments cylindriques verticaux (7).
